# EUROPÄISCHE PATENTSCHRIFT

(11) **EP 1 907 087 B1**
(45) Veröffentlichungstag und Bekanntmachung des Hinweises auf die Patenterteilung: **30.09.2009**
(21) Anmeldenummer: 06776493.6
(22) Anmeldetag: 28.07.2006
(51) Int. Cl.: A63F 13/10, G06T 17/20

(54) **NAVIGATIONSGRAPH MIT STRATEGISCHER INFORMATION**
NAVIGATION GRAPH HAVING STRATEGIC INFORMATION
GRAPHE DE NAVIGATION CONTENANT DES INFORMATIONS STRATEGIQUES

(30) Priorität: 28.07.2005 DE 102005035908
(43) Veröffentlichungstag der Anmeldung: 09.04.2008
(73) Patentinhaber: X-Aitment GmbH, 66123 Saarbrücken (DE)
(72) Erfinder: MARKUS, Wilhelm, 66280 Sulzbach/Saar (DE)
(74) Vertreter: Köllner, Malte
(86) Internationale Anmeldenummer: PCT/EP2006/007522
(87) Internationale Veröffentlichungsnummer: WO 2007/012497

(56) Entgegenhaltungen:
- US-A1- 2003 117 398
- RAJKO S ET AL: "A pursuit-evasion BUG algorithm" PROCEEDINGS OF THE 2001 IEEE INTERNATIONAL CONFERENCE ON ROBOTICS AND AUTOMATION. ICRA 2001. SEOUL, KOREA, MAY 21 - 26, 2001, PROCEEDINGS OF THE IEEE INTERNATIONAL CONFERENCE ON ROBOTICS AND AUTOMATION, NEW YORK, NY : IEEE, US, Bd. VOL. 1 OF 4, 21. Mai 2001 (2001-05-21), Seiten 1954-1960, XP010550431 ISBN: 0-7803-6576-3
- MADDEN D ET AL: "Visibility Path-Finding in Relation to Hybrid Strategy-Based Models in Distributed Interactive Applications" DISTRIBUTED SIMULATION AND REAL-TIME APPLICATIONS, 2004. DS-RT 2004. EIGHTH IEEE INTERNATIONAL SYMPOSIUM ON BUDAPEST, HUNGARY 21-23 OCT. 2004, PISCATAWAY, NJ, USA,IEEE, 21. Oktober 2004 (2004-10-21), Seiten 91-97, XP010749524 ISBN: 0-7695-2232-7
- FOUX G ET AL: "TWO-DIMENSIONAL ROBOT NAVIGATION AMONG UNKNOWN STATIONARY POLYGONAL OBSTACLES" IEEE TRANSACTIONS ON ROBOTICS AND AUTOMATION, IEEE INC, NEW YORK, US, Bd. 9, Nr. 1, 1. Februar 1993 (1993-02-01), Seiten 96-102, XP000381554 ISSN: 1042-296X

## Beschreibung

### Gebiet der Erfindung

Die Erfindung handelt von Robotersteuerung, Simulationen oder Computerspielen. In zunehmendem Maße kommen dabei sog. Agenten zum Einsatz. Agenten sind Software-Module, die in der Regel einem eigenständigen, künstlichen Subjekt bzw. Spieler entsprechen. Bei einem Autorennen, z. B., wird der menschliche Spieler ein Auto fahren, während die anderen Autos Agenten sind bzw. von Agenten gesteuert werden. Ein Agent kann aber auch die Steuerung eines Roboters in der realen Welt übernehmen.

Es gibt verschiedene Aspekte, wenn ein Agent mit künstlicher Intelligenz mit einer virtuellen Umgebung interagieren soll. Der wohl wichtigste und schon am längsten untersuchte Bereich ist die Navigation des Agenten innerhalb einer solchen Welt.

Häufig stellt sich bei der Navigation eines Agenten in einer virtuellen Welt die Frage, wie er von Punkt A zu Punkt B kommt.

### Stand der Technik

Zur Lösung dieser Frage gibt es den bekannten A-Stern Algorithmus. Dieser liefert eine Abfolge von Punkten, welche der Agent ansteuern muss, damit er sein Ziel erreicht. Dies könnte man in der realen Welt mit jemandem vergleichen, der eine Karte liest und daraus Stück für Stück den Weg zum Ziel findet. Jedoch kann der ermittelte Weg nur so gut sein, wie die Karte.

Überträgt man den Aspekt der Karte in die virtuelle Welt kommt man zu zwei häufig verwendeten Datenstrukturen zur Repräsentation von Wegen. Dies sind zum einen Waypoints (Wegpunkte), welche Position innerhalb der virtuellen Welt markieren, die begehbar sind. Wegpunkte sind untereinander mit Kanten verbunden, damit festgestellt werden kann, von welcher Position aus eine andere erreichbar ist. Eine andere Methode, eine Karte der virtuellen Welt zu generieren, bietet ein Navigationsgraph.

Ein Navigationsgraph ist ein Graph *Gₙₐᵥ*, welcher Informationen enthält, die z. B. ein Agent zur Navigation verwenden kann. Er dient dazu die virtuelle Welt soweit zu abstrahieren, dass ein Agent eine Wegberechnung durchführen kann, um vom Punkt A zum Punkt B zu gelangen. Auf einem Navigationsgraphen können bekannte Algorithmen, wie z. B. der A-Stern-Algorithmus eine Wegberechnung durchführen.

Rajko und LaValle [Raj01] beschreiben einen Algorithmus zur. Robotersteuerung in einer zweidimensionalen Umgebung. Diese Umgebung wird durch eine einfach zusammenhängende offene Menge dargestellt. Ein Navigationsgraph enthält Informationen sowohl über die Begehbarkeit seiner Knoten als auch über das Vorhandensein eines feindlichen Roboters.

### Aufgabe

Aufgabe der Erfindung ist es, die Navigation bzw. Orientierung von Agenten in virtuellen Welten zu verbessern.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Will man einen Agenten haben, der sich vor seinen Gegnern verstecken kann und seine Gegner auch in einen Hinterhalt locken kann, so benötigen wir zusätzlich Information über Versteckpositionen *P_{hidden}* in der virtuellen Welt des Computerspiels, an denen der Agent Schutz in Bezug auf eine Gegnerposition *P_{enemy}* suchen kann. Es gibt nahezu unendliche viele dieser Paare (*P_{hidden}, P_{enemy}*). Der hier vorgestellte Algorithmus reduziert die Paaranzahl auf eine akzeptable Anzahl, indem spezielle Eigenschaften der Geometrie ausgenutzt werden.

Hierzu wird ein Navigationsgraph für die Orientierung eines Agenten in einer virtuellen Landschaft erstellt. Dabei bildet jedes begehbare, konvexe Polygon einer geometrischen Repräsentation der virtuellen Landschaft einen Knoten des Navigationsgraphen. Ferner bilden Nachbarschaftsrelationen benachbarter begehbarer, konvexer Polygone Kanten des Navigationsgraphen. Mindestens ein Knoten des Navigationsgraphen wird um mindestens eine strategische Information ergänzt. Die strategische Information umfasst Angaben über die Sichtbarkeit und/oder Nicht-Sichtbarkeit des Knoten in Bezug auf andere Knoten und/oder Nachbarschaftsbeziehungen zu mindestens einem benachbarten Knoten, sofern der mindestens eine benachbarte Knoten vorgegebene Eigenschaften hinsichtlich der Sichtbarkeit und/oder Nicht-Sichtbarkeit des mindestens einen benachbarten Knoten in Bezug auf andere Knoten aufweist.

So zeichnet sich eine Scharfschützen-Position in einem Computerspiel z. B. dadurch aus, dass ein Agent von dieser Position aus viele andere Knoten des Navigationsgraphen sehen kann und daher selber auch eine hohe Sichtbarkeit hat. Gleichzeitig ist die Scharfschützenposition in der unmittelbaren Nähe eines Knoten, der als Deckung dienen kann, d. h. eines Knoten, der nur für wenige Knoten sichtbar ist.

Die zusätzlichen strategischen Informationen ermöglichen es einem Agenten unmittelbar, sich auf intelligente Weise mit Hilfe des Navigationsgraphen in der virtuellen Welt zu orientieren.

Besonders wichtig ist die Ermittlung von Engstellen in der virtuellen Welt bzw. im Navigationsgraphen, da diese einen entscheidenden Einfluss auf die Definition von strategischen Positionen und Informationen haben.

Engstellen werden wie folgt ermittelt: zunächst wird ein zusammenhängendes Polygon gewählt, dass nicht konvex ist. Danach werden Kanten zwischen nicht benachbarten Ecken des Polygons ermittelt, die vollständig innerhalb des Polygons verlaufen. Gesucht wird die kleinste dieser Kanten. Entlang dieser Kante wird das Polygon in zwei kleinere Polygone zerlegt. Die eingefügte Kante wird als Engstelle definiert, sofern sie eine vorgegebene Mindestlänge unterschreitet. Dies erscheint sinnvoll, da an einer solchen Stelle des Polygons die beiden gegenüberliegenden Ränder besonders nahe beieinander liegen.

Engstellen erlauben z. B. bei der Simulation von Rettungs- und Evakuierungsaktionen für Gebäude, z. B. für Brandfälle, die schnelle Analyse von Fluchtwegen bzw. -szenarien, bei denen die Engstellen auf Gefahrstellen hinweisen, an denen es zu Blockaden der Fluchtwege kommen kann.

Damit der Navigationsgraph optimal für die Aufnahme von strategischen Informationen vorbereitet ist, wird er vorzugsweise wie folgt erzeugt: Eine geometrische Repräsentation der virtuellen Landschaft in Form einer Dreieckszerlegung der Landschaft wird zur Verfügung gestellt. Die Dreiecke werden nach dem Gesichtspunkt der Begehbarkeit durch den Agenten gefiltert. Die begehbaren Dreiecke werden auf mindestens eine Projektionsebene projiziert. Die auf der mindestens einen Projektionsebene verteilten Dreiecke werden für jede Projektionsebene getrennt zu zusammenhängenden Polygonen zusammengefasst. Die so erhaltenen zusammenhängenden Polygone werden in konvexe Polygone unterteilen. Für jede Projektionsebene bildet jedes konvexe Polygon einen Knoten des Navigationsgraphen für diese Projektionsebene. Die Nachbarschaftsrelationen benachbarter konvexer Polygone bilden die Kanten des Navigationsgraphen. Die unterschiedlichen Navigationsgraphen der mindestens einen Projektionsebene werden zu einem gemeinsamen Navigationsgraphen zusammengefasst, indem benachbarte konvexe Polygone in unterschiedlichen Navigationsgraphen gesucht werden, woraus Nachbarschaftsrelationen und daraus Kanten des gemeinsamen Navigationsgraphen erstellt werden.

Es ist besonders schnell und präzise, wenn zur Berechnung der Sichtbarkeit oder Nicht-Sichtbarkeit eines Knotens die üblichen Tiefeninformationen einer Grafikkarte genutzt werden. Dazu wird die Sicht aus der Perspektive des Knoten mit Hilfe der Grafikkarte berechnet. Die Grafikkarte berechnet zu jedem Pixel des Bildes auch die zugehörige Tiefeninformation. Diese kann zur Berechnung des von dem Knoten aus sichtbaren Volumens oder der sichtbaren Fläche genutzt werden.

Die Berechnung der Sichtbarkeit bzw. Nicht-Sichtbarkeit ermöglicht eine Reihe von strategischen Klassifizierungen.

So kann z. B. ein Knoten als "Deckung" gekennzeichnet werden, wenn er von weniger als einer vorgegebenen Anzahl Knoten aus sichtbar ist, also von nur wenigen Knoten aus. In einer Deckung kann man kaum beschossen werden.

Genauso kann ein Knoten als "Verteidigungsposition" oder "Scharfschützenposition" gekennzeichnet werden, wenn er mindestens für eine vorgegebene Anzahl von Knoten sichtbar ist und mindestens einen benachbarten Knoten hat, der höchstens für eine zweiten, kleineren vorgegebene Anzahl von Knoten sichtbar ist. Mit anderen Worten: das für den Scharfschützen sichtbare Volumen wird maximiert und in der unmittelbaren Nachbarschaft befindet sich eine Deckung. Dadurch hat der Scharfschütze genug Sicht, um schießen zu können, ist aber wenigstens teilweise verdeckt, so dass er nicht leicht getroffen werden kann.

Ein "Hinterhalt" liegt vor, wenn ein Knoten einer "Verteidigungsposition" entspricht und von einer Engstelle aus sichtbar ist bzw. eine Engstelle von dem "Hinterhalt" aus gesehen werden kann. Ein Gegner muss durch die Engstelle durch; der Agent kann vom "Hinterhalt" aus die Engstelle beschießen und hat selbst eine sichere Verteidigungsposition.

Ferner wird die Aufgabe gelöst durch ein Computerprogramm, das bei Ablauf auf einer Recheneinheit, einem Mikrocontroller, DSP, FPGA oder Computer oder auf einer Mehrzahl davon in.einem Netzwerk das erfindungsgemäße Verfahren in einer seiner Ausgestaltungen ausführt.

Weiterhin wird die Aufgabe gelöst durch ein Computerprogramm mit Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Insbesondere können die Programmcode-Mittel auf einem computerlesbaren Datenträger gespeicherte Instruktionen sein.

Außerdem wird die Aufgabe gelöst durch einen Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk das erfindungsgemäße Verfahren in einer seiner Ausgestaltungen ausführen kann.

Auch wird die Aufgabe gelöst durch ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Dabei wird unter einem Cornputer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird die Aufgabe gelöst durch ein moduliertes Datensignal, welches von einer Recheneinheit, einem Mikrocontroller, DSP, FPGA oder Computer oder von einer Mehrzahl davon in einem Netzwerk ausführbare Instruktionen zum Ausführen des erfindungsgemäßen Verfahrens in einer seiner Ausgestaltungen enthält.

Als Computersystem zum Ausführen des Verfahrens kommen sowohl ein Stand-alone Computer oder Mikrocontroller, DSPs oder FPGAs in Betracht, als auch ein Netzwerk von Mikrocontrollern, DSPs, FPGAs oder Rechnern, beispielsweise ein hausinternes, geschlossenes Netz, oder auch Rechner, die über das Internet miteinander verbunden sind. Ferner kann das Computersystem durch eine Client-Server-Konstellation realisiert sein, wobei Teile der Erfindung auf dem Server, andere auf einem Client ablaufen.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Darstellung eines Beispiels eines Navigationsmesh;
- Fig. 2: eine schematische Darstellung verschiedener Nachbarschaftsbeziehungen zwischen zwei Dreiecken;
- Fig. 3: eine schematische Darstellung des Abstand zu einer Kante;
- Fig. 4: eine schematische Darstellung eines Schattenbereichs in drei Dimensionen; und
- Fig. 5: eine Darstellung der Szene gemäß Fig. 4 in einer zweidimensionalen Draufsicht.

### 1 Navigationsgraph - Überblick

Für die Umsetzung eines Navigationsgraphen gibt es mehrere Möglichkeiten. Wir verwenden als grundlegende Datenstruktur das so genannte NavMesh, dessen Aufbau in [Rab02] im Detail erklärt ist.

In [Rab02] wird genau erklärt wie ein NavMesh aufgebaut ist, aber nicht wie es aus beliebiger Dreiecks Geometrie aufgebaut werden kann.

Wie der Name des NavMesh vermuten lässt, basiert das NavMesh auf der Dreiecks-Geometrie der virtuellen Umgebung. Das NavMesh ist abstrakt betrachtet ein Grundriss der begehbaren Oberflächen einer virtuellen Welt. Für den Aufbau des NavMesh werden die Dreiecke der geometrischen Repräsentation der virtuellen Landschaft zu konvexen Polygonen zusammengefasst. Diese bilden dann eine neue Unterteilung der virtuellen Landschaft. Die Datenstruktur *Cₙₐᵥₘₑₛₕ* eines NavMesh ist ein Graph. Ein Knoten v des Graphen *Gₙₐᵥₘₑₛₕ* wird zur Speicherung der konvexen Polygone verwendet. Einem Knoten können auch andere mathematische Objekte mit einer konvexen Grundform zugeordnet werden.

Innerhalb konvexer Polygone der geometrischen Repräsentation der virtuellen Landschaft kann man, laut der Definition von konvex, immer zwei Punkte mit einer geraden Linie verbinden, ohne dass diese die Umrandung schneidet. Diese Eigenschaft eignet sich für einen Einzugsbereich eines Knoten im Navigationsgraphen, da man sich innerhalb dieses Bereichs bewegen kann, ohne auf ein Hindernis zu stoßen. Es werden dementsprechend keine weiteren Kanten oder Knoten für diesen Bereich benötigt, womit dies eine hindernisfreie Raumeinteilung für einen Knoten des Navigationsgraphen darstellt.

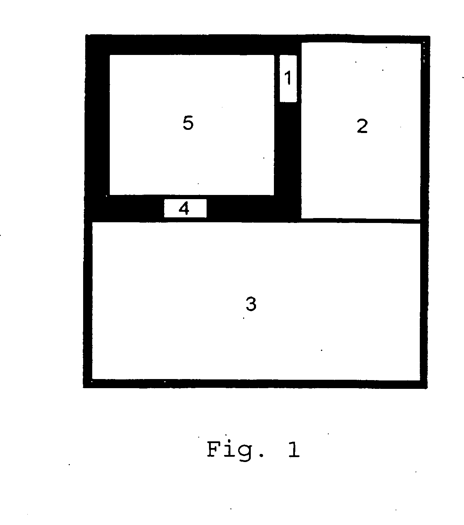

Bei einem NavMesh verwendet man konvexe Polygone, da sich diese aus der vorhandenen Geometrie aufbauen lassen. In Fig. 1 entsprechen die fünf Raumeinheiten den fünf Knoten des Navigationsgraphen für diese Beispielwelt. Damit man auf diesem Navigationsgraphen eine Wegsuche starten kann, benötigt jeder Knoten noch eine eindeutige Position innerhalb dieser Welt. Die Position sollte sich zudem innerhalb des zugeordneten konvexen Polygons befinden. Man nimmt als Position p für den Knoten v die Mitte des ihm zugeordneten konvexen Polygons. Die Mitte eines konvexen Polygons lässt sich als arithmetisches Mittel aller Eckpunkte des Polygons ermitteln.

Eine Kante e = (vl, v2) wird zwischen zwei Knoten v1, v2 eingefügt, wenn man aus dem konvexen Oberflächenbereich des Knoten v1 in den konvexen Bereich des Knoten v2 gelangen kann. Diese Kanten verbinden nur Knoten, deren konvexe Bereiche unmittelbare Nachbarn sind. Dies verhindert, dass der Graph quadratische Komplexität erhält, indem jeder Knoten mit jedem verbunden sein könnte.

Der Navigationsgraph muss eine Funktion *f_{tograph}* zur Verfügung stellen, die es dem Agenten ermöglicht, seine Position innerhalb der virtuellen Welt in den Navigationsgraph abzubilden. Konkret bedeutet dies, dass der Agent für eine Position A, z. B. sein Startpunkt, in der Welt eine Funktion ausführt, die ihm einen eindeutigen Knoten innerhalb des Navigationsgraphen zurückgibt. Gleiches muss für Position B, des Zieles, ausführbar sein. Danach kann der Agent eine Wegsuche innerhalb des Navigationsgraphen ausführen.

Zur Verwendung des Ergebnisses der Wegsuche benötigt der Navigationsgraph ebenfalls eine Funktion *f_{toworld},* welche die inverse Richtung berechnet, d. h. für Knoten und Kanten innerhalb des Navigationsgraphen Positionen in der virtuellen Welt berechnet, damit sich der Agent nicht nur auf dem Navigationsgraphen, sondern in der virtuellen Welt bewegen kann.

### 2 Navigationsgraph - Erzeugung

Der Navigationsgraph verwendet als Grunddatenstruktur ein NavMesh. Ein NavMesh kann man auf verschiedene Arten aufbauen. Die einfachste Möglichkeit ist, das NavMesh von einem Benutzer von Hand erstellen zu lassen. Eine weitere Möglichkeit besteht darin das NavMesh aus bereits vorhandenen Meshes der Spielumgebung abzuleiten. Ein Mesh ist eine zusammenhängende Anordnung von Dreiecken, wobei benachbarte Dreiecke zwei gemeinsame Eckpunkte aufweisen. Man kann zu einem Eckpunkt eine Liste von Dreiecken erstellen, die diesen Eckpunkt verwenden. In dem Grossteil der verfügbaren Spiele gibt es keine Meshes, aus denen man ein NavMesh ableiten kann. Ein Mesh wird dann von Hand erzeugt.

Wir wollen im Folgenden einen Algorithmus vorstellen, der als Eingangsdaten nur eine Menge von Dreiecken erhält. Diese müssen nicht als Mesh vorliegen. Dennoch müssen die Dreiecke in ihrer Gesamtheit eine sinnvolle Spielwelt modellieren. Es sollte daher nicht zu Überschneidungen von Dreiecken kommen. Die meisten Designtools für Spielwelten stellen dies aber sicher, da sich überschneidende Dreiecke auch fehlerhaft durch eine Grafikkarte dargestellt würden.

Der Hauptgesichtspunkt dieses Algorithmus ist die Art und Weise, wie die konvexen Polygone des NavMesh erzeugt werden. Für eine durch Dreiecke repräsentierte virtuelle Landschaft gibt es nahezu unendlich viele unterschiedliche NavMesh Einteilungen. Wir werden die NavMesh Einteilung so wählen, dass man zusätzliche strategische Informationen aus dem entstandenen NavMesh ablesen kann.

Ein weiteres Ziel besteht darin, die Anzahl der neu eingeführten konvexen Polygone minimal zu halten. Dies ist notwendig für die Verwendung in Spielen, da dort immer Speichermangel herrscht.

Der vorgestellte Algorithmus zur automatischen Erzeugung eines NavMesh verfolgt somit folgende Ziele:
- Die Eingangsdaten sind lediglich Dreiecke, die eine virtuelle Landschaft modellieren;
- NavMesh Erzeugung mit minimaler Anzahl von konvexen Polygonen;
- Einteilung der Polygone so wählen, dass eine strategische

Aufteilung des NavMesh möglich wird.

### 2.1 Filterung der Eingangsdaten

Der erste Schritt des Algorithmus besteht darin, die ihm übergebenen Dreiecke nach dem Gesichtspunkt der Begehbarkeit zu filtern. Ein NavMesh soll nur aus solche Bereiche der Spielwelt bestehen, die auch durch einen Agenten (Computergesteuerter Spieler) begangen werden können. Man will z.B. keine Dreiecke in den Eingangsdaten haben, die dazu verwendet werden eine Wand zu modellieren.

Hierbei hat man die Wahl, dass nur jene Dreiecke übergeben werden, die in der virtuellen Welt als begehbar gelten. Dies ist für virtuellen Welten notwendig, die keiner logischen Physik unterliegen, wo z. B. Figuren an der Decke gehen können.

Für den eingebauten Eingangsfilter wird der Richtungsvektor der Erdanziehung in der virtuellen Welt, sowie ein maximaler Winkel für überwindbare Steigungen vorgegeben. Mit diesen beiden Daten werden Dreiecke anhand ihrer Flächennormale aus der Menge der Eingangsdaten gefiltert. Sollte ein Dreieck eine zu große Steigung haben, so wird es durch den Filter verworfen. Übrig bleiben alle diejenigen Dreiecke auf denen ein Agent navigieren kann. Darin sind keine Wände mehr enthalten.

### 2.2 Aufsplittung der Dreiecksmenge auf verschiedene Ebenen

Für die Erstellung des Navigationsmesh wollen wir die vorhandene Geometrie in konvexe Polygone aufteilen. Polygone sind allerdings nur in zwei Dimensionen definiert, die Eingangsdaten bestehen allerdings aus Dreiecken welche Eckpunkte in drei Dimensionen besitzen. Mithilfe einer 3D nach 2D Projektion kann man die dritte Dimension eliminieren. Nimmt man nun alle Dreiecke aus den gefilterten Eingangsdaten und projiziert diese auf eine einzige Ebene, welche als Normalenvektor die Richtung der bereits bekannten Erdanziehungskraft hat, dann kommt es zu Überlappungen von Dreiecken. Man kann sich dies sehr deutlich klar machen, wenn man sich zwei Stockwerke vorstellt, welche übereinander liegen. Bei einer Projektion der Dreiecke beider Stockwerke auf eine Ebene kommt es auf der Projektionsfläche zu einer Überlappung der Dreiecke. Die Menge der daraus resultierenden Dreiecke kann nicht mehr verwendet werden.

Da die Eingangsdaten nicht unbedingt gefiltert sind (dies war ein optionaler Schritt), kann es vorkommen, dass einige Dreiecke durch die Projektion auf die Ebene degeneriert werden. Dies bedeutet, dass alle Punkte des Dreiecks auf einer Linie liegen.

Um diesen Problemen entgegen zu wirken, verwendet man bei der Projektion nicht nur eine Projektionsrichtung, sondern mehrere Projektionsebenen.

Bevor wir also die Dreiecke projizieren können, müssen diese auf verschiedene Projektionsebenen verteilt werden. Ein Dreieck wird einer Projektionsebene zugeordnet, wenn die Normale des Dreiecks nur um einen vorgegebenen Winkel von der Normale der Projektionsebene abweicht. Zudem darf die Distanz der Eckpunkte des Dreiecks zu der Projektionsebene einen vom Designer festgelegten Maximalwert *d*ₘₐₓ nicht überschreiten. Dieser Maximalwert ist abhängig von der virtuellen Landschaft und sollte so gewählt werden, dass nach der Projektion keine Dreiecke, überlappen. Dieser Wert lässt sich aber leicht durch den Designer festlegen. Dies kann z. B. die Höhe einer Treppenstufe sein.

Eine Möglichkeit, diese Probleme anzugehen, ist das sukzessive hinzufügen von neuen Projektionsebenen, wenn ein Dreieck keiner bereits vorhandenen Projektionsebene hinzugefügt werden kann.

### 2.3 Erzeugung maximaler zusammenhängender Polygone

Der Schritt der Erzeugung von maximalen zusammenhängenden Polygonen entsteht aus der Bedingung, dass der NavMesh Algorithmus eine minimale Anzahl von konvexen Polygonen erzeugen soll. Zudem wollen wir die Erzeugung der konvexen Polygone so steuern, dass strategische Informationen aus dem NavMesh abgelesen werden können. Dies erfordert, dass Navigations-Engstellen in der virtuellen Welt erkannt werden.

Viele NavMesh Algorithmen, welche auf der Basis von bereits bestehenden Meshes arbeiten, verwenden an dieser Stelle einen Algorithmus von Seidel und Mehlhorn [Toz02], der Dreiecke eines Meshs zu konvexen Polygonen zusammenfasst. Der Algorithmus ist mit einer Laufzeit von O(n), wobei n die Anzahl der Dreiecke ist, sehr schnell. Man hat allerdings keine Kontrolle darüber, wie diese Dreiecke zusammengesetzt werden. Zudem unterliegt man der Aufteilung der Dreiecke, wie sie bereits vorhanden ist. Dies bedeutet, dass die resultierenden konvexen Polygone aus einer Teilmenge der Kanten bestehen, wie sie bereits bei den Dreiecken vorhanden waren. Es werden also keine neuen Kanten eingeführt. Dies ist aber sehr kritisch, wenn man Engpässe in der Spielgeometrie erkennen will. Es wird nämlich in der geometrischen Repräsentation der virtuellen Welt nicht sichergestellt, dass solche Engpässe durch eine Dreieckskante markiert sind.

Um dieses Problem zu umgehen werden im hier vorgeschlagenen Algorithmus alle Dreiecke zu maximalen zusammenhängenden Polygonen zusammengesetzt. Sollte ein maximal zusammenhängendes Polygon bereits konvex sein, ist es bereits ein Bestandteil der minimalen Menge der konvexen Polygone und muss nicht weiter betrachtet werden.

Somit bleiben nur diejenigen Kanten übrig, die den Rand einer begehbaren Oberfläche markieren. Alle anderen Kanten werden durch diesen Schritt entfernt. Diese zusammenhängenden Polygone kann man anschließend durch einen Convex Partition Algorithmus in konvexe Polygone unterteilen, dazu später mehr.

Die Hauptaufgabe besteht nun darin, die auf den Projektionsebenen verteilten Dreiecke zu zusammenhängenden Polygonen zusammenzufassen, für jede Projektionsebene getrennt.

### 2.3.1 Nachbarschaftsbeziehung zwischen Dreiecken

Damit man Dreiecke miteinander zu einem zusammenhängenden Polygon verbinden kann, muss man zu jedem Dreiecke diejenigen Dreiecke ermitteln, welche an dessen Rand angrenzen. Da eine der Bedingungen für den NavMesh Algorithmus die beliebige Anordnung von Dreiecken war, brauchen wir einen speziellen Algorithmus, mit dessen Hilfe man diese benachbarten Dreiecke in angemessener Zeit finden kann. In einem Mesh ist diese Aufgabe sehr schnell gelöst, wenn man zu jedem Eckpunkt eine Liste von Dreiecken speichert, welche sich diesen Eckpunkt teilen. Man muss dann nur in den Listen der Eckpunkte eines Dreiecks nach Nachbarn für dieses Dreieck suchen. Aufgrund der erforderlichen Regelmäßigkeit für ein Mesh wird damit die Aufgabe effizient gelöst.

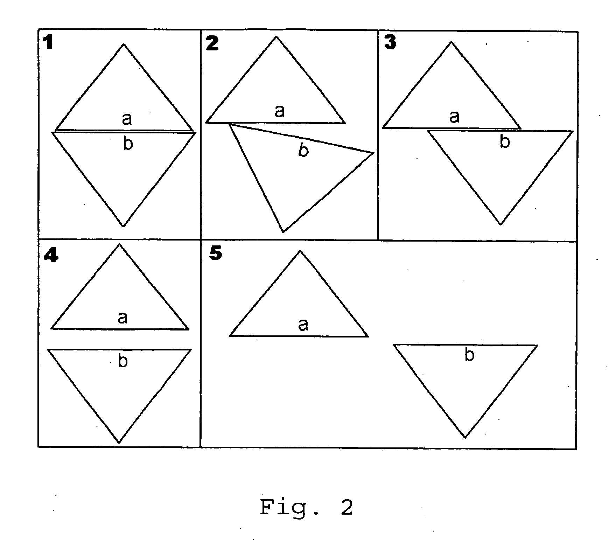

In Fig. 2 sieht man das Beispiel eines Meshs in Unterbild 1. Betrachtet man aber eine beliebige Menge von Dreiecken, so kann es auch andere Fälle geben, in denen Dreiecke benachbart sind, wie z. B. in Unterbild 2 und 3. Des Weiteren gibt es noch die Unterbilder 4 und 5, in denen Fälle gezeigt werden, bei denen die Dreiecke keine Nachbarn mehr sind.

Den Nachbarschaftstest für Dreiecke kann man auf eine lokale Suche von Kanten reduzieren. Dies wird auch deshalb gemacht, weil wir später zu einem bereits existierenden Polygon angrenzende Polygone finden wollen. Jedes Polygon (und damit auch Dreieck) besteht aus Kanten, welche die Umrandung eines Polygons bilden. Ein Polygon wird durch eine Liste von Eckpunkten definiert. Zeichnet man nun Kanten von Eckpunkt zu Eckpunkt in der Reihenfolge des Auftauchens in der Liste, so erhält man ein Polygon, wenn man zusätzlich den Endpunkt mit dem Anfangspunkt verbindet.

Da sich Dreiecke nicht überlappen dürfen, ist sichergestellt, dass, wenn zwei Kanten parallele Nachbarn sind, dann ebenfalls die Dreiecke Nachbarn sind (entsprechend Unterbild 3). Wir müssen also in der Lage sein, zu einer Kante eines Polygons eine Kante eines anderen Polygons zu finden. Dies könnte man dadurch realisieren, dass man eine Kante gegen alle anderen Kanten testet. Dies hat allerdings eine Laufzeit von O(n²), wobei n die Anzahl aller Kanten ist. Um diesen Aufwand zu vermeiden, verwenden wir eine räumliche Beschleunigungsstruktur, in die alle Kanten eingefügt werden. Man kann mit dieser räumlichen Beschleunigungsstruktur die Nachbarkanten in konstanter Zeit ermitteln. Die Beschleunigungsstruktur könnte z. B. ein regelmäßiges Gitter sein.

Hat man einmal die Kanten ermittelt, die in unmittelbarer Nachbarschaft zu einer anderen Kante liegen, dann muss man testen, ob diese Kanten echte Nachbarn darstellen. Dazu gibt es zwei Kriterien die getestet werden müssen. Das erste Kriterium ist die Parallelität der beiden zu vergleichenden Kanten. Sind diese Kanten nicht parallel (oder wenigstens nahezu parallel, d. h. bis auf einen vorgegebenen kleinen Winkel), dann können sie keine Nachbarn sein. Dieser Test ist schneller als der Test des zweiten Kriteriums und wird daher immer zuerst ausgeführt. Das zweite Kriterium ist der Abstand *d*ₘₐₓ zwischen den beiden Kanten. Der Abstand darf hierbei nicht als eindimensionaler Test gesehen werden, wie man es für den Abstand zwischen zwei Punkten kennt.

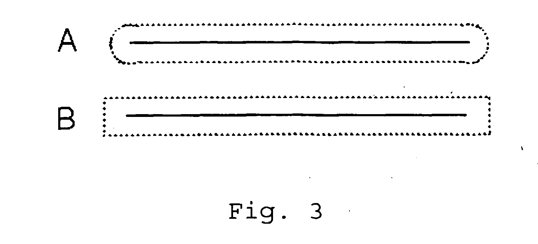

In Fig. 3 sehen wir den Einzugsbereich einer Kante A. Die gestrichelte Linie um Kante A zeigt den Bereich innerhalb dessen alle Punkt einen Abstand *d*ₘₐₓ zur Kante nicht überschreiten. Befindet sich irgendein Punkt der auf Nachbarschaft getesteten Kanten in diesem Einzugsbereich, so wird die Kante als Nachbar gewertet.

Wir haben den Test, wie für Kante B in Fig. 3 gezeigt, vereinfacht. Bei Kante B ist der Abstand an den Eckpunkten etwas gedehnt. Dies ist deshalb akzeptabel, da der Abstand *d*ₘₐₓ einen sehr kleinen Wert hat und damit der zu erwartende Fehler an den Eckpunkten klein sein wird. Sollten beide Kriterien erfüllt sein, so wird die getestete Kante als Nachbar deklariert.

Mit diesem Nachbarschaftstest kann man nun benachbarte Polygone finden, welche im nächsten Schritt zu einem größeren Polygon verschmolzen werden.

### 2.3.2 Verschmelzung von benachbarten Polygonen

Nachdem wir nun in der Lage sind zu einem Dreieck seine Nachbarn zu ermitteln, müssen wir dieses Dreieck mit seinen Nachbarn verschmelzen. Es wird dabei darauf geachtet,'dass man nicht ein Dreieck mit sich selbst verschmilzt. Um zwei Dreiecke zu verschmelzen, werden die beiden Dreiecke an derjenigen Kante zusammengefügt, an der sie sich berühren. In beiden Dreiecken entfernt man dazu jeweils diejenige Kante, an der sie sich berühren, und verknüpft die beiden Dreiecke mit zwei neuen Kanten miteinander, die diejenigen Stücke der entfernten Kanten ersetzen, an denen diese nicht identisch waren bzw. überstanden.

Dieses Verfahren wird mit den dabei entstandenen Polygonen in gleicher Weise iterativ durchgeführt.

Es kann natürlich noch mehr Stellen geben, an denen sich zwei Polygone berühren, aber nachdem man die beiden Polygone zu einem Polygon verschmolzen hat, verwendet man einen Reparaturalgorithmus, der diese Kanten entfernt.

Nach dem Verschmelzen kann es verschiedene Konstellationen geben, in denen es notwendig ist, das neue Polygon aufzubereiten. Der erste Fall ist derjenige, in dem durch das Verknüpfen der beiden Polygone mit den beiden neuen Kanten, eben diese die Länge Null haben, weil die beiden entfernten Kanten genau aufeinander lagen. Der Reparaturalgorithmus läuft nun ausgehend von der zusammengefügten Stelle über das Polygon und entfernt Kanten, welche eine definierte Minimallänge unterschreiten. Damit werden auch Kanten der Länge Null entfernt, die Probleme bei der Nachbarschaftsberechnung erzeugen können, da sie keine Richtung haben.

Der zweite Fall in dem man das neu entstandene Polygon aufbereiten muss, tritt ein, wenn durch die Verschmelzung Spitzen in der Polygonumrandung entstanden sind. Diese äußern sich dadurch, dass der Winkel zwischen zwei Kanten in einem Knoten 0 Grad beträgt. Um diese Spitze zu entfernen, wird genau dieser Knoten aus der Polygonliste gelöscht. Man iteriert dazu ebenfalls über das Polygon und untersucht die einzelnen Knoten auf diese Gegebenheit.

Der dritte und letzte Fall entspricht mehr einer kosmetischen Maßnahme. Durch die Verschmelzung können Polygone entstehen, bei denen der Winkel zwischen zwei Kanten in einem Knoten genau 180 Grad beträgt. Dies sieht so aus, als wenn sich dort kein Knotenpunkt befindet, da ein- und ausgehende Kante auf einer Linie liegen. Diese Knoten werden ebenfalls aus der Liste des Polygons entfernt.

Da man für alle drei Fälle über das Polygon iterieren muss sobald sich etwas geändert hat, werden diese Algorithmen nur dann ausgeführt, wenn sie wirklich benötigt werden. Dazu wird Fall eins nach jedem Verschmelzen durchgeführt, aber nur in einer lokalen Umgebung der Stelle, an der die beiden Polygone miteinander verbunden wurden. Dies ist notwendig, da an dieser Stelle Kanten entstehen können, welche die Nachbarschaftssuche beeinflussen. Die beiden anderen Fälle sind nicht relevant für die korrekte Nachbarschaftssuche und werden deshalb soweit verschoben, bis alle möglichen Polygone miteinander verbunden wurden.

Mit diesem Verschmelzungsalgorithmus werden die maximal zusammenhängenden Polygone erzeugt.

### 2.3.3 Algorithmus zum Erzeugen zusammenhängender Polygone

Der Algorithmus zur Erzeugung der zusammenhängenden Polygone beginnt bei der Menge der Dreiecke, die auf einer Ebene einsortiert sind. Diese werden zu Polygonen umbenannt und in eine globale Liste von Polygonen eingetragen, die nach dem Durchlauf des Algorithmus die zusammenhängenden Polygone enthalten soll. Danach werden alle Dreiecke in die Beschleunigungsstruktur für die Nachbarschaftssuche eingefügt. Anschließend iteriert man über die Menge dieser Polygone und erweitert jedes Polygon durch das Verschmelzen von Nachbarpolygonen soweit dies Möglich ist. Dazu wird jeweils das aktuell bearbeitete Polygon komplett aus der Beschleunigungsstruktur entfernt. So wird verhindert, dass man Kanten vom gleichen Polygon als Nachbarn findet. Wurde ein Polygon mit dem aktuell zu ergänzenden Verschmolzen, so wird dies ebenfalls aus der Beschleunigungsstruktur entfernt sowie aus der Liste der globalen Polygone. Ist man über alle Polygone in der globalen Liste iteriert und hat diese maximal erweitert, dann enthält diese Liste nur noch die zusammenhängenden Polygone, welche gesucht waren.

### 2.4 Erzeugung konvexer Polygone

Nachdem wir nun eine Menge von zusammenhängenden Polygonen haben, müssen wir diese in konvexe Polygone unterteilen. Jedes zusammenhänge Polygon wird dazu getrennt in konvexe Polygone unterteilt. Dies wird durch einen Konvex Partition Algorithmus erreicht [Gre83]. Hier haben wir gezielt einen exakten Algorithmus verwendet, welcher, beschleunigt durch dynamische Programmierung, ein Minimierungsziel verfolgt. Standardmäßig versucht dieser Algorithmus die Anzahl der konvexen Polygone zu minimieren.

Betrachtet man die daraus entstehenden konvexen Polygone, so stellt man sehr schnell fest, dass dieses Ergebnis unbefriedigend ist, da konvexe Polygone keine Raumgrenzen beachten. Eines der globalen Ziele der NavMesh Erzeugung ist aber, dass wir das NavMesh in Bezug auf strategische Informationen aufbauen. Diese strategischen Informationen hängen stark von Engstellen in der Navigationsoberfläche ab. Da die Engstellen ebenfalls für menschliche Spieler gelten, ist es von Vorteil, die Engstellen zu erkennen. An einer Engstelle hat ein Spieler nicht die Möglichkeit einem Angriff auszuweichen. Zudem sind Engstellen meistens Türen oder Korridore.

Engstellen werden wie folgt ermittelt: zunächst wird ein zusammenhängendes Polygon gewählt, dass nicht konvex ist. Danach werden Kanten zwischen nicht benachbarten Ecken des Polygons ermittelt, die vollständig innerhalb des Polygons verlaufen. Gesucht wird die kleinste dieser Kanten. Entlang dieser Kante wird das Polygon in zwei kleinere Polygone zerlegt.

Die eingefügte Kante wird als Engstelle definiert, sofern sie eine vorgegebene Mindestlänge unterschreiten. Dies erscheint sinnvoll, da an einer solchen Stelle des Polygons die beiden gegenüberliegenden Ränder besonders nahe beieinander liegen.

Der Vorgang der Unterteilung von zusammenhängenden Polygonen wird solange fortgesetzt, bis das zusammenhängende Polygon vollständig in konvexe Polygone zerlegt ist.

Durch den Konvex Partition Algorithmus werden in zusammenhängenden Polygonen neue Kanten eingeführt. Wir haben das Kriterium für die Wahl der neuen Kanten so gewählt, dass neue Kanten genau an Engstellen des zusammenhängenden Polygons eingefügt werden.

Hat der Konvex Partition Algorithmus die optimale Einteilung berechnet, werden aus den Datenstrukturen dieses Algorithmus zum einen die konvexen Polygone ausgelesen. Zum anderen sind dort die Nachbarschaftsbeziehung abgespeichert. Man kann sehr leicht entnehmen, welche konvexen Polygone Nachbarn sind. Diese Information wird ebenfalls aus dem Algorithmus entnommen und dient für die aufzubauende NavMesh Datenstruktur als Kante, die angibt, welche Knoten (konvexe Bereiche) miteinander verbunden sind. Zusätzlich werden alle Kanten markiert, die noch keinen Nachbarn haben. Die Nachbarn zu diesen Kanten werden im anschließenden Schritt gesucht, da diese Nachbarn über die Grenzen eines zusammenhängenden Polygons hinaus gesucht werden müssen.

### 2.5 Aufbau des NavMesh Graphen

Bisher haben wir nur die virtuelle Landschaft in optimale konvexe Polygone unterteilt. Nun müssen wir die teilweise zusammenhangslosen konvexen Polygone zu einem Graphen zusammenfassen.

Bei der Erzeugung der konvexen Polygone wurden bereits Graphkanten zwischen konvexen Polygonen eingeführt, sofern sich diese im selben zusammenhängenden Polygon befunden haben. Nun müssen die Verbindungen zwischen konvexen Polygonen aus unterschiedlichen zusammenhängenden Polygonen hergestellt werden. In jedem konvexen Polygon wurden bereits diejenigen Polygonkanten markiert, welche noch keine Nachbarn haben.

Damit man nun die Nachbarn finden kann, welche sich auf unterschiedlichen Projektionsebenen befinden, werden die konvexen Polygone in den 3D Raum der virtuellen Welt transformiert. Dazu werden alle Eckpunkte des Polygons mittels der Funktion *f_{toworld}* in den 3D Raum zurückgerechnet. Die Polygone bleiben dadurch weiterhin Polygone, da sie aus einer 2D Repräsentation entstanden sind. Anschließend benutzt man einen Algorithmus ähnlich dem der Nachbarschaftssuche während der Erzeugung der zusammenhängenden Polygone in 2D, mit dem man zu einer Polygonkante eine Nachbarkante finden kann.

Hierzu verwenden wir wieder eine räumliche Beschleunigungsstruktur, diesmal aber für den dreidimensionalen virtuellen Raum. Um Nachbarkanten zu finden werden zuerst alle Polygonkanten in der Umgebung zu einer Polygonkante ermittelt, die nicht zu dem aktuell untersuchten Polygon gehören. Die Kriterien für eine Nachbarkante sind identisch mit den Kriterien, die wir bereits bei der Nachbarschaftssuche in Abschnitt 2.3.1 gesehen haben. Diesmal ist allerdings der Abstandswert *d*ₘₐₓ um einiges größer, da wir auch Polygonkanten von konvexen Polygonen finden wollen, die eine Treppe oder ähnliches bilden. Das Kriterium für die Parallelität bleibt unverändert.

Haben wir eine solche Nachbarkante ermittelt, steht fest, dass diese beiden konvexen Polygone durch eine Graphkante verbunden werden müssen.

Es tritt aber häufig der Fall ein, dass diese beiden Polygonkanten nicht gleich lang sind. Wir Splitten daher die längere Polygonkante so auf, dass eine Polygonkante entsteht, welche genauso lang ist, wie die kürzere Polygonkante, und eben dieser genau gegenüber liegt. Alle neu entstanden Polygonkanten, müssen wieder in die 3D Beschleunigungsstruktureingeordnet werden, da an diese Polygonkanten andere Polygone angrenzen können.

Den Vorgang der Nachbarsuche wiederholen wir so lange, bis alle Polygonkanten einmal auf eine Nachbarschaftsbeziehung untersucht wurden. Ist der Schritt ausgeführt haben wir ein vollständiges NavMesh erzeugt.

### 3. Strategieanalyse

Die Strategieanalyse setzt auf dem NavMesh auf, welches vorher durch den Algorithmus erzeugt wurde. Hierbei werden zwei verschieden Formen von strategischen Informationen gewonnen. Zum einen werden Hinterhaltpositionen gewonnen und zum anderen Scharfschützenpositionen. Scharfschützenpositionen sind gute taktische Positionen, wenn man eine Fernschusswaffe besitzt.

### 3.1 Scharfschützenposition

Das Finden von Scharfschützenpositionen ist ein vollautomatischer Prozess. Wir greifen dazu einen Algorithmus aus dem Buch "AI Game Programming" [Rab02] in modifizierter Form auf. Dieser Algorithmus wertet eine Position als Scharfschützenposition, wenn man von dieser Position aus viele Knoten in seinem Navigationsgraphen sieht und einen direkten Nachbarknoten hat, von dem aus man nur wenige Knoten sehen kann.

Dieses Entscheidungskriterium funktioniert nicht bei einem NavMesh, dessen konvexe Bereiche auf maximale Größe getrimmt sind, wie bei unserem NavMesh, und daher sehr unterschiedliche Flächen bzw. Volumina überdecken. Wir haben daher das Entscheidungskriterium nicht an die Menge der sichtbaren Knoten gebunden, sondern an die Menge des sichtbaren Volumens. Dazu wird mithilfe der Grafikkarte eine Rundumsicht für eine Position gerendert. Anschließend nimmt man den Tiefenwert jedes Pixels (Z-Buffer) und interpretiert ein Pixel als Kegel. Mit der Kegelannahme und der Tiefe des Raumes in diesem Pixel kann man das gesamte sichtbare Volumen berechnen, wenn man alle Pixelvolumen addiert. Dann suchen wir Knoten, in denen wir viel Raumvolumen sehen, die aber einen Nachbarknoten im NavMesh haben, an dem man nur sehr wenig Raumvolumen sieht, und damit dort eine Deckungsmöglichkeit hat.

### 3.2 Hinterhaltpositionen

Für die Findung der Hinterhaltposition benötigen wir eine Klassifizierung der konvexen Polygone des NavMesh in Zimmer und Durchgänge. Diese Klassifizierung kann von Hand oder maschinell erfolgen. Haben wir erst einmal die Information, können wir sagen, wo sich in der Geometrie Türen befinden. Diese sind die Übergänge von Zimmern zu Durchgängen und umgekehrt. Das von uns vorgestellt NavMesh ermöglicht erst eine solche Auswahl, da Polygonkanten an eben diesen Engstellen, den Türen, eingeführt wurden.

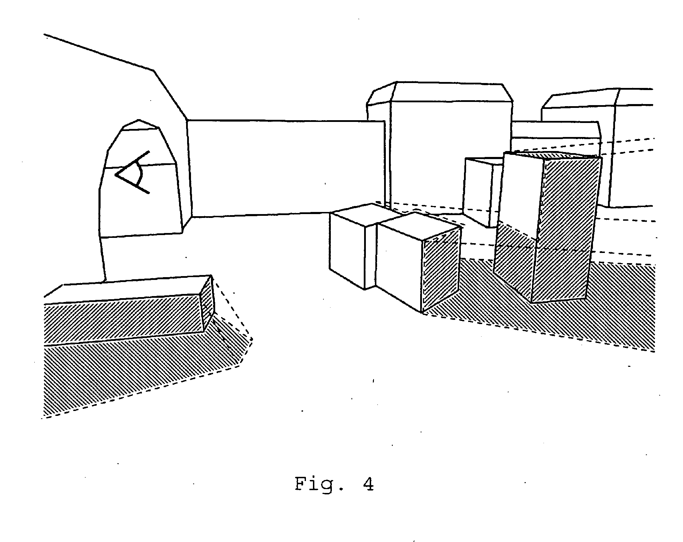

Haben wir erst einmal die Türen für ein Zimmer ermittelt, so werden von den Mittelpunkten der Türen aus mehrere Bilder mit der Grafikkarte gerendert, welche den gesamten Sichtwinkel der Tür abdecken. Von diesen Bildern wird, wie bereits bei den Scharfschützenpositionen, nur der Tiefenwert der einzelnen Pixel verwendet. Wir berechnen mit den Tiefenwerten das Volumen, welches sich im von der Tür aus nicht-sichtbaren Bereich der Bilder befindet. Diesen Bereich nennen wir fortan den Schattenbereich des Betrachters (Augensymbol). In Fig. 4 sehen wir einen solchen Schattenbereich, dargestellt durch die schraffierten Oberflächen sowie die gestrichelten Linien, welche das Volumen dieses Bereichs visualisieren.

Betrachtet man ein einzelnes Pixel des gerenderten Bildes aus dem Betrachterwinkel des Mittelpunkts der Tür, so ist der Schattenbereich jenes Volumen, das bei dem Tiefenwert des Pixels anfängt, und bis zu einem definierten Maximum reicht. Dieses Volumen hat für jedes Pixel die Form eines Kegelstumpfes. Dieser Kegelstumpf wird für jedes Pixel des Bildes berechnet.

Liegt eine Spielfigur komplett in einem Schattenvolumen, so hat sie dort Deckung. Wir haben nun das Problem, dass ein einzelner Kegelstumpf nicht ausreicht, um eine komplette Spielfigur am schmaleren Ende des Kegelstumpfes umfassen zu können. Wir müssen daher ermitteln, welche der elementaren Schattenbereiche im Zusammenhang mit ihren Nachbarvolumen genügend Schattenvolumen bieten, sodass eine Spielfigur entweder in geduckter oder stehender Form am kleinen Ende umfasst sein kann.

In Bezug auf das gerenderte Bild von der Tür aus fassen wir Pixel in Gruppen zusammen, die ein zusammenhängendes Sichthindernis ergeben. Diese Pixelgruppen, welche durch ein Polygon beschrieben werden können, werden darauf untersucht, ob sie in der horizontalen breit genug sind, eine komplette Spielfigur zu verdecken. Wir betrachten hier nur die horizontale Ausbreitung, da wir in dem gerenderten Bild keine Information über die Geometrie im Schattenvolumen, also nicht-sichtbaren Bereich, haben. Ob ein Sichthindernis hoch genug ist, wird erst später festgestellt. Nur die Kegelstümpfe, welche aus den Pixelgruppen hervorgehen, die breit genug waren, werden im Folgenden weiterverwendet, die anderen werden verworfen. In Fig. 4 sieht man ein Sichthindernis unten links. Dieses Hindernis ist nicht hoch genug, dass dahinter eine Spielfigur Deckung hätte. Wäre allerdings hinter dieser Mauer ein Graben, so wäre die Deckung wieder ausreichend.

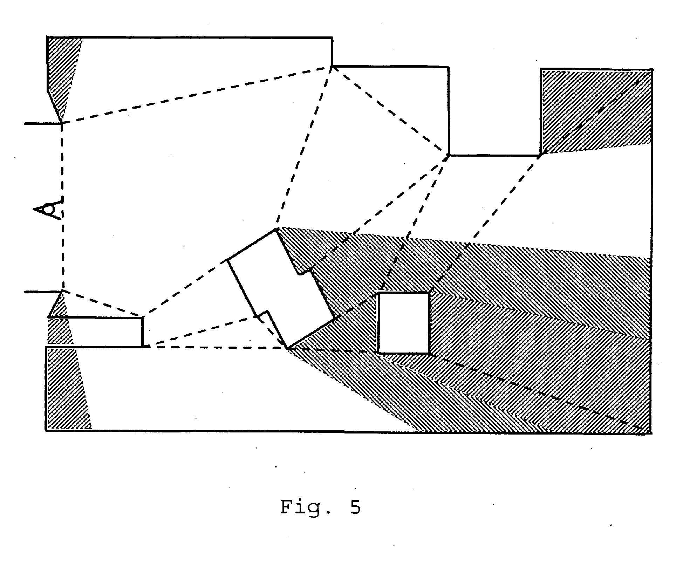

Im nächsten Schritt führen wir einen Schnitt zwischen den übrig gebliebenen Kegelstümpfen und dem NavMesh durch. Uns interessieren dabei die Schnittflächen. Diese Schnittflächen sind Teil des ursprünglichen NavMesh, wobei man für diese Teile des NavMesh nun die Information besitzt, dass sie im Schattenbereich des Betrachters von der Tür liegen. Dies kann man in Fig. 5 sehen. Das vorhandene NavMesh wird durch die gestrichelten Linien dargestellt.

Die Teile des NavMesh, welche im Schattenbereich liegen, wurden schraffiert dargestellt. Des Weiteren sieht man eine unterschiedliche Schraffierung. Die unterschiedliche Schraffierung bringt zum Ausdruck, dass die Schattenbereiche unterschiedlich Deckung geben. Der eine Schattenbereich gibt nur Deckung in geduckter Form der Spielfigur und der andere in geduckter sowie stehender Form der Spielfigur. Dies sieht man, wenn man Fig. 4 mit Fig. 5 vergleicht, wobei Fig. 5 eine zweidimensionale Draufsicht der Szene gemäß Fig. 4 darstellt.

Die entstandene Schnittfläche kann allerdings nicht komplett verwendet werden. Jede elementare Schnittfläche, die Schnittfläche zwischen NavMesh und Kegelstumpf, wird nun darauf untersucht, ob der darüber liegende Schattenbereich hoch genug ist, um einer geduckten oder stehenden Spielfigur Deckung zu gebend. Dieser Test ist die vertikale Ergänzung zu dem bereits durchgeführten horizontalen Verdeckungstest mit den Pixelgruppen. Sollte eine Schnittfläche, und deren darüber liegendes Schattenvolumen, weder genügend Deckung für eine geduckte noch eine stehende Spielfigur haben, wird sie verworfen.

Mit den restlichen Schnittflächen wird nun eine Neuunterteilung des NavMeshs durchgeführt, wobei die konvexen Polygone des NavMeshs so geändert werden, dass sie entweder nur Schattenbereiche oder keine Schattenbereiche enthalten. Hierzu werden die weiter oben beschriebenen Techniken, wie das Erzeugen von maximal zusammenhängenden Polygonen und konvexen Polygonen, verwendet. Das Ergebnis ist ein neues NavMesh, welches wiederum nur konvexe Polygone enthält, die aber verschiedene Schattenbereich-Klassifikationen aufweisen.

Der gesamte Vorgang wird für alle Türen wiederholt. Dabei kann es auch zu weiteren Unterteilungen von Schattenbereichen anderer Türen kommen, was aber die Funktionsweise des Algorithmus nicht behindert. Dies ist sogar gewollt. Man hat anschließend Schattenbereiche, die einer virtuellen Figur Deckung zu mehreren Türen in einem Raum geben.

Die gewonnenen Informationen werden im NavMesh hinterlegt und während der Laufzeit durch die Agenten benutzt, wenn diese Deckung in Bezug auf Türen suchen, um einen Gegner in den Hinterhalt zu locken.

### Liste der zitierten Literatur:

[Gre83] Daniel H. Greene. "The decomposition of polygons into convex parts". In Franco P. Preparata, editor, Computational Geometry, volume 1 of Adv. Comput. Res., pages 235-259. JAI Press, Greenwich, Conn., 1983.
[Rab02] Steve Rabin (Ed.): "AI Game Programming Wisdom", Charles River Media, Hingham, Massachusetts, 2002.
[Raj01] Stjepan Rajko, Steven M. LaValle: "A Pursuit-Evasion BUG Algorithm". In Proceedings of the 2001 IEEE International Conference on Robotics and Automation (ICRA 2001). Vol. 1 of 4, IEEE, New York, pages 1954-1960, 21. May 2001.
[Toz02] Paul Tozour: "Building a Near-Optimal Navigation Mesh". In [Rab02]

## Patentansprüche

1. Verfahren zum Erstellen eines Navigationsgraphen für die Orientierung eines Agenten in einer virtuellen Landschaft, mit folgenden Schritten:
a) jedes begehbare, konvexe Polygon einer geometrischen Repräsentation der virtuellen Landschaft bildet einen Knoten des Navigationsgraphen;
b) Nachbarschaftsrelationen benachbarter begehbarer, konvexer Polygone bilden Kanten des Navigationsgraphen;
c) mindestens ein Knoten des Navigationsgraphen wird um mindestens eine strategische Information ergänzt;
d) wobei die strategische Information Angaben über die Sichtbarkeit und/oder Nicht-Sichtbarkeit des Knoten in Bezug auf andere Knoten umfasst und/oder Nachbarschaftsbeziehungen zu mindestens einem benachbarten Knoten, sofern der mindestens eine benachbarte Knoten vorgegebene Eigenschaften hinsichtlich der Sichtbarkeit und/oder Nicht-Sichtbarkeit des mindestens einen benachbarten Knoten in Bezug auf andere Knoten aufweist;
e) wobei ein zusammenhängendes Polygon gewählt wird, dass nicht konvex ist;
f) wobei Kanten zwischen nicht benachbarten Ecken des zusammenhängenden Polygons ermittelt werden, die vollständig innerhalb des zusammenhängenden Polygons verlaufen;
g) wobei die kleinste dieser Kanten gesucht wird;
h) wobei entlang dieser Kante das zusammenhängende Polygon in zwei kleinere Polygone zerlegt wird; und
i) wobei die eingefügte Kante als Engstelle definiert wird, sofern sie eine vorgegebene Mindestlänge unterschreitet.

2. Verfahren nach Anspruch 1,
**gekennzeichnet durch folgende Schritte:**
a) eine geometrische Repräsentation der virtuellen Landschaft in Form einer Dreieckszerlegung der Landschaft wird zur Verfügung gestellt;
b) die Dreiecke werden nach dem Gesichtspunkt der Begehbarkeit **durch** den Agenten gefiltert;
c) die begehbaren Dreiecke werden auf mindestens eine Projektionsebene projiziert;
d) die auf der mindestens einen Projektionsebene verteilten Dreiecke werden für jede Projektionsebene getrennt zu zusammenhängenden Polygonen zusammengefasst;
e) die so erhaltenen zusammenhängenden Polygone werden in konvexe Polygone unterteilt;
f) für jede Projektionsebene bildet jedes konvexe Polygon einen Knoten des Navigationsgraphen für diese Projektionsebene;
g) die Nachbarschaftsrelationen benachbarter konvexer Polygone bilden die Kanten des Navigationsgraphen; und
h) die unterschiedlichen Navigationsgraphen der mindestens einen Projektionsebene werden zu einem gemeinsamen Navigationsgraphen zusammengefasst, indem benachbarte konvexe Polygone in unterschiedlichen Navigationsgraphen gesucht werden, woraus Nachbarschaftsrelationen und daraus Kanten des gemeinsamen Navigationsgraphen erstellt werden.

3. Verfahren nach einem der vorhergehenden Ansprüche,
**dadurch gekennzeichnet,**
**dass** die Sichtbarkeit oder Nicht-Sichtbarkeit eines Knotens mit Hilfe von Tiefeninformationen berechnet werden, die von einer Grafikkarte berechnet und zur Verfügung gestellt werden.

4. Navigationsgraph für die Orientierung eines Agenten in einer virtuellen dreidimensionalen Landschaft, mit folgenden Eigenschaften:
a) jedes begehbare, konvexe Polygon einer geometrischen Repräsentation der virtuellen Landschaft bildet einen Knoten des Navigationsgraphen;
b) Nachbarschaftsrelationen benachbarter begehbarer, konvexer Polygone bilden Kanten des Navigationsgraphen;
c) mindestens ein Knoten des Navigationsgraphen ist um mindestens eine strategische Information ergänzt;
d) wobei die strategische Information Angaben über die Sichtbarkeit und/oder Nicht-Sichtbarkeit des Knoten in Bezug auf andere Knoten umfasst und/oder Nachbarschaftsbeziehungen zu mindestens einem benachbarten Knoten, sofern der mindestens eine benachbarte Knoten vorgegebene Eigenschaften hinsichtlich der Sichtbarkeit und/oder Nicht-Sichtbarkeit des mindestens einen benachbarten Knoten in Bezug auf andere Knoten aufweist; und
e) der Navigationsgraph weist mindestens eine Engstelle auf, die folgendermaßen ermittelt wird:
f) ein zusammenhängendes Polygon wird gewählt, dass nicht konvex ist;
g) Kanten zwischen nicht benachbarten Ecken des zusammenhängenden Polygons werden ermittelt, die vollständig innerhalb des zusammenhängenden Polygons verlaufen;
h) die kleinste dieser Kanten wird gesucht;
i) entlang dieser Kante wird das zusammenhängende Polygon in zwei kleinere Polygone zerlegt; und
j) die eingefügte Kante wird als Engstelle definiert, sofern sie eine vorgegebene Mindestlänge unterschreiten.

5. Computerprogramm, das bei Ablauf auf einer Recheneinheit, einem Mikrocontroller, DSP, FPGA oder Computer oder auf einer Mehrzahl davon in einem Netzwerk das Verfahren nach einem der vorhergehenden Verfahrensansprüche ausführt.

6. Computerprogramm mit Programmcode-Mitteln gemäß dem vorhergehenden Anspruch, die auf einem computerlesbaren Datenträger gespeichert sind.

7. Moduliertes Datensignal, welches von einer Recheneinheit, einem Mikrocontroller, DSP, FPGA oder Computer oder von einer Mehrzahl davon in einem Netzwerk ausführbare Instruktionen zum Ausführen eines Verfahrens nach einem der vorhergehenden Verfahrensansprüche enthält.

8. Computersystem oder Computernetzwerk mit mindestens einer Einrichtung, die ausgestaltet ist, das Verfahren nach einem der vorhergehenden Verfahrensansprüche durchzuführen.

## Claims

1. A method for generating a navigation graph for the orientation of an agent in a virtual landscape, comprising the following steps:
a) each traversable, convex polygon of a geometric representation of the virtual landscape forms a node of the navigation graph;
b) neighborhood relations of neighboring traversable, convex polygons form edges of the navigation graph;
c) at least one node of the navigation graph is supplemented by at least one item of strategic information;
d) wherein the strategic information comprises details regarding visibility and/or non-visibility of the node with respect to other nodes and/or neighborhood relations with at least one neighboring node, as far as the at least one neighboring node has prespecified characteristics with respect to visibility and/or non-visibility of the at least one neighboring node with respect to other nodes;
e) a contiguous polygon is selected which is not convex;
f) edges between non-neighboring corners of the contiguous polygon are ascertained which extend completely inside the contiguous polygon;
g) the smallest of these edges is sought;
h) along this edge, the contiguous polygon is decomposed into two smaller polygons; and
i) the inserted edge is defined as bottleneck as long as its length is less than a prespecified minimum length.

2. The method as claimed in claim 1, **characterized by** the following steps:
a) a geometric representation of the virtual landscape in the form of triangular decomposition of the landscape is made available;
b) the triangles are filtered according to the aspect of traversability by the agent;
c) the traversable triangles are projected onto at least one projection plane;
d) the triangles, which are distributed on the at least one projection plane, are combined for each projection plane separately to form contiguous polygons;
e) the contiguous polygons thus obtained are decomposed into convex polygons;
f) for each projection plane, each convex polygon forms a node of the navigation graph for said projection plane;
g) the neighborhood relations of neighboring convex polygons form the edges of the navigation graph; and
h) the various navigation graphs of the at least one projection plane are combined to form one common navigation graph by searching for neighboring convex polygons in different navigation graphs, from which neighborhood relations and, from this, edges of the common navigation graph are generated.

3. The method as claimed in one of the preceding claims, **characterized in that**
the visibility or non-visibility of a node is calculated using depth information which is calculated and made available by a graphics card.

4. A navigation graph for the orientation of an agent in a virtual three-dimensional landscape, with the following characteristics:
a) each traversable, convex polygon of a geometric representation of the virtual landscape forms a node of the navigation graph;
b) neighborhood relations of neighboring traversable, convex polygons form edges of the navigation graph;
c) at least one node of the navigation graph is supplemented by at least one item of strategic information;
d) wherein the strategic information comprises details regarding visibility and/or non-visibility of the node with respect to other nodes and/or neighborhood relations with at least one neighboring node, as far as the at least one neighboring node has prespecified characteristics with respect to visibility and/or non-visibility of the at least one neighboring node with respect to other nodes; and
e) the navigation graph has at least one bottleneck which is ascertained as follows:
f) a contiguous polygon is selected which is not convex;
g) edges between non-neighboring corners of the contiguous polygon are ascertained which extend completely inside the contiguous polygon;
h) the smallest of these edges is sought;
i) along this edge, the contiguous polygon is decomposed into two smaller polygons; and
j) the inserted edge is defined as bottleneck as long as its length is less than a prespecified minimum length.

5. A computer program, which, when it is run on a computing unit, a microcontroller, DSP, FPGA or computer or on a plurality thereof in a network, carries out the method as claimed in one of the preceding method claims.

6. A computer program with program-code means as claimed in the preceding claim, which are stored on a computer-readable data carrier.

7. A modulated data signal which contains instructions, which can be executed by a computing unit, a microcontroller, DSP, FPGA or computer or a plurality thereof in a network for carrying out the method as claimed in one of the preceding method claims.

8. A computer system or computer network with at least one device which is configured to carry out the method as claimed in one of the preceding method claims.

## Revendications

1. Procédé d'établissement d'un graphe de navigation servant à orienter un agent dans un paysage virtuel, le procédé comprenant les étapes suivantes :
a) chaque polygone convexe praticable d'une représentation géométrique du paysage virtuel forme un noeud du graphe de navigation,
b) des relations de voisinage de polygones convexes praticables voisins forment des arêtes du graphe de navigation,
c) au moins un noeud du graphe de navigation est complété d'au moins une information stratégique,
d) l'information stratégique comprend des données concernant la visibilité et/ou la non-visibilité du noeud par rapport à d'autres noeuds et/ou des relations de voisinage par rapport à au moins un noeud voisin, pour autant que le ou les noeuds voisins présentent des propriétés prédéterminées en termes de visibilité et/ou de non-visibilité du ou des noeuds voisins par rapport à d'autres noeuds,
e) un polygone connexe non convexe est sélectionné,
f) les arêtes entre des sommets non voisins du polygone connexe qui s'étendent complètement à l'intérieur du polygone connexe sont déterminées,
g) la plus petite de ces arêtes est cherchée,
h) le polygone connexe est décomposé en deux polygones plus petits le long de cette arête, et
i) l'arête insérée est définie comme emplacement étroit si elle n'atteint pas une longueur minimale prédéterminée.

2. Procédé selon la revendication 1, **caractérisé en** par les étapes suivantes :
a) une représentation géométrique du paysage virtuel sous la forme d'une décomposition du paysage en triangles est préparée,
b) les triangles sont filtrés en fonction de leur praticabilité par l'agent,
c) les triangles praticables sont projetés sur au moins un plan de projection,
d) les triangles répartis sur le ou les plans de projection sont rassemblés en polygones connexes séparés dans chaque plan de projection,
e) les polygones connexes ainsi obtenus sont divisés en polygones convexes,
f) dans chaque plan de projection, chaque polygone convexe forme un noeud du graphe de navigation dans ce plan de projection,
g) les relations de voisinage entre des polygones convexes voisins forment les arêtes du graphe de navigation et
h) les différents graphes de navigation du ou des plans de projection sont rassemblés en un graphe de navigation commun en cherchant des polygones convexes voisins dans différents graphes de navigation pour établir des relations de voisinage et de là des arêtes du graphe de navigation commun.

3. Procédé selon l'une des revendications précédentes, **caractérisé en ce que** la visibilité ou la non-visibilité d'un noeud sont calculées à l'aide d'informations de profondeur qui sont calculées par une carte graphique et présentées.

4. Graphe de navigation destiné à l'orientation d'un agent dans un paysage tridimensionnel virtuel, et présentant les propriétés suivantes :
a) chaque polygone convexe praticable d'une représentation géométrique du paysage virtuel forme un noeud du graphe de navigation,
b) des relations de voisinage entre des polygones convexes praticables voisins forment des arêtes du graphe de navigation,
c) au moins un noeud du graphe de navigation est complété d'au moins une information stratégique,
d) l'information stratégique comprend des données concernant la visibilité et/ou la non-visibilité du noeud par rapport à d'autres noeuds et/ou des relations de voisinage par rapport à au moins un noeud voisin, pour autant que le ou les noeuds voisins présentent des propriétés prédéterminées en termes de visibilité et/ou de non-visibilité du ou des noeuds voisins par rapport à d'autres noeuds, et
e) le graphe de navigation présente au moins un emplacement étroit qui est déterminé de la façon suivante :
f) un polygone connexe non convexe est sélectionné,
g) les arêtes qui relient des sommets non voisins du polygone connexe et qui s'étendent complètement à l'intérieur du polygone connexe sont déterminées,
h) la plus petite de ces arêtes est recherchée,
i) le polygone connexe est décomposé en deux polygones plus petits le long de cette arête, et
j) l'arête insérée est définie comme emplacement étroit si elle ne dépasse pas une longueur minimale prédéterminée.

5. Programme informatique qui, lorsqu'il est exécuté sur une unité de calcul, un microcontrôleur, un DSP, un FPGA, un ordinateur ou sur plusieurs de ces équipements reliés en réseau, exécute le procédé selon l'une des revendications de procédé qui précèdent.

6. Programme informatique doté de moyens de code de programme selon la revendication précédente, conservés en mémoire sur un support de données lisible par ordinateur.

7. Signal de donnée modulé qui contient des instructions exécutables par une unité de calcul, un microcontrôleur, un DSP, un FPGA, un ordinateur ou sur plusieurs de ces équipements reliés en réseau en vue d'exécuter un procédé selon l'une des revendications de procédé qui précèdent.

8. Système informatique ou réseau d'ordinateur qui présentent au moins un dispositif configuré pour exécuter le procédé selon l'une des revendications de procédé qui précèdent.
